# EUROPEAN PATENT SPECIFICATION

(11) **EP 0 400 043 B1**
(45) Date of publication and mention of the grant of the patent: **24.03.1993**
(21) Application number: 89902374.1
(22) Date of filing: 26.01.1989
(51) Int. Cl.: B23K 1/00, B23K 37/04

(54) **PROCESS FOR COPARALLEL JOINING OF PLATE METAL BY BRAZING, IN PARTICULAR FOR PREPARING A PLATE-SHAPED HEAT EXCHANGER, AND HOLDING MEANS THEREFOR**
VERFAHREN ZUR KOPARALLELEN VERBINDUNG VON PLATTENMETALL DURCH HARTLöTEN,INSBESONDERS ZUR HERSTELLUNG EINES PLATTEN WÄRMAUSTAUSCHERS UND HALTEMITTEL DAZU
PROCEDE D'ASSEMBLAGE EN PARALLELE DE PLAQUES METALLIQUES PAR BRASAGE, EN PARTICULIER POUR REALISER UN ECHANGEUR DE CHALEUR A PLAQUES ET PIECE DE FIXATION RELATIVE

(30) Priority: 29.01.1988 DK 486/88
(43) Date of publication of application: 05.12.1990
(73) Proprietor: STEFFENSEN, Anton, Skytt, DK-8831 Logstrup (DK)
(72) Inventor: STEFFENSEN, Anton, Skytt, DK-8831 Logstrup (DK)
(74) Representative: Kjerrumgaard, Bent
(86) International application number: DK8900012
(87) International publication number: WO8907034

(56) References cited:
- US-A- 4 140 266

## Description

The present invention relates to a process for coparallel joining, by brazing, of at least two metal plates, each having at least one through-going hole for preparing a plate-shaped heat exchanger, the metal plates being arranged in coparallel relationship with their holes positioned opposite each other.

The invention is specifically suited for use when a passage through a number of metal plates is desired or required, and when it is not immediately feasible to get into contact with the interspaces between said plates from the passage. This is particularly the case when preparing plate-shaped heat exchangers, where it is decisive for the function of the plate-shaped heat exchanger that no mixing takes place of the media flowing in the flow channels of the plate-shaped heat exchanger.

Plate-shaped heat exchangers are used in numerous places, e.g. when distributing district heating, where they are inserted in places where the heat from the producer's closed process line is to be transferred to the user's district heating line.

Known processes for preparing plate-shaped heat exchangers consist generally in providing pressed plates with packings at their respective flow holes and on all sides of their edge portions whereafter they are clamped together into a plate-shaped heat exchanger by means of beams, covers and bolts. The packings at the flow holes in the plates may e.g. be made as double packings having a drained-off zone.

US Patent No. 4,140,266 discloses an apparatus for soldering plates of a plate heat exchanger together. The apparatus comprises means for heating and cooling the fluid and a temperature-monitoring device connected to the heating means for controlling the latter.

Plate-shaped heat exchangers of this type comprise a number of different components complicating the assembling process which has to be performed with great precision to prevent leaks in the plate-shaped heat exchanger at relatively high gas or water pressures. In addition, the large number of components forming part of the construction beside the heat exchanger plates contributes considerably to increase the weight of the plate-shaped heat exchanger.

Furthermore, it is known to produce heat exchangers by brazing. A given number of pressed plates for a plate-shaped heat exchanger are arranged in a stack, whereafter they are brazed at the flow holes to provide the parallel flow channels. The heat exchanger plates are to be made with great precision so that when placing the plates in a stack, the narrow, uniform gap which is a condition for performing the brazing is obtained. However, unavoidable temperature differences during the heating will deform the plates and spoil this close fit, if the plates are only kept in position by their own weight. This may be remedied by putting weights on the stack of plates during the brazing process. However, the weights increase the temperature differences during the heating with the risk of additional deformation of the plates. Besides, the heating of the weights requires more energy.

The deformation of the plates taking place during heating is particularly critical, when brazing at the edge of relatively large flow holes since it is very difficult to maintain the narrow, uniform gap between the edges of the holes in this situation. This results in a limitation in the size of the flow holes in a brazed plate-shaped heat exchanger.

The present invention provides a process of the above-mentioned kind by which plate-shaped heat exchangers may be brazed without the use of additional weights and by which the inclination of the plates towards deformation only to a small degree influences the size of the flow holes at which brazing is to be performed.

According to the invention, the process of the above-mentioned kind is characterized in that the metal plates are kept in the coparallel relationship by means of a cut ring having a cross-section which in the direction from its central portion has the shape of an outwardly turning U, and that the cut ring is positioned about the hole edges by pressing its ends against each other and keeps the metal plates so tightly together that during the brazing process suitable capillary gaps are available for the brazing metal between the plates, respectively between the plates and the ring.

Hereby a tight and very strong assembly is obtained without use of beams, covers and bolts and which, in addition, gives a considerably lighter construction with regard to weight.

Moreover, the cut ring retains and centres the heat exchange plates so that it is possible to braze heat exchangers having far larger flow holes than previously. This is often desirable as the pressure drop across the heat exchangers may hereby be reduced.

Advantageous and preferred embodiments of the process of the invention are defined in the dependent claims.

In the following, the invention will be illustrated in more detail with reference to the drawing, wherein
Figure 1 shows a perspective view of a separated plate-shaped heat exchanger,
Figure 2 shows a perspective view of a holding means,
Figure 3 shows a frontal view of a plate-shaped heat exchanger wherein the flow channels have been brazed in accordance with the invention by using the holding means of Figure 2, and
Figure 4 shows a sectional view along line x-x of Figure 3.

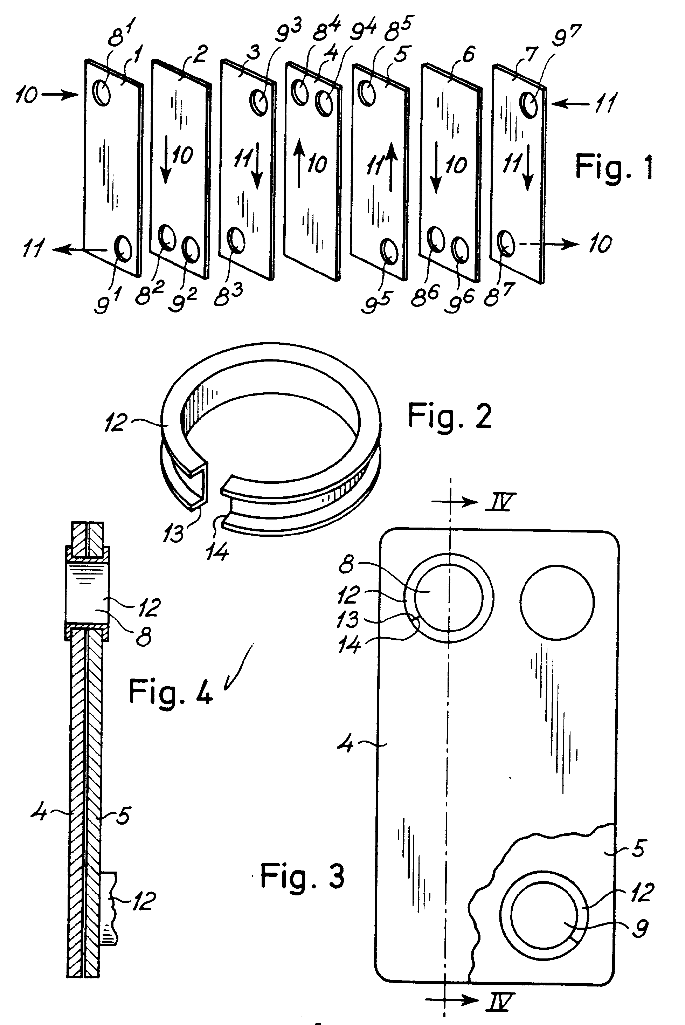

The plate-shaped heat exchanger, seen separated in Figure 1, consists of a number of pressed heat exchange plates 1, 2, 3 ...7, having through-going holes 8¹, 8², 8³ ...8⁷ and 9¹, 9², 9³..9⁷.
The heat exchange plates are assembled in twos by brazing along the edge of two opposite holes 8 and 9 so that two closed, parallel flow channels 10 and 11 are formed. The media of the flow channels 10 and 11 flow alternately through every other interspace between the plates. Hereby a cold flow of liquid or gas passing through one channel may be heated by means of a hot flow of liquid or gas flowing through the other channel.

The flow channel 10 consists of the interspaces between the plates 1, 2, 3, 4 and 5 and 6 of the through-going holes 8¹, 8²...8⁷. The hole 8¹ forms the inlet of the flow channel 10 into the plate-shaped heat exchanger, the holes 8²-8³ and 8⁴-8⁵ brazed peripherally together in pairs form the passages between the interspaces of the plates, and the holes 8⁶-8⁷ brazed peripherally together form the outlet of the flow channel 10 from the plate-shaped heat exchanger. Correspondingly, the flow channel 11 wherein the medium flows in the opposite direction relative to the medium of the flow channel 10, consists of the interspaces between the plates 2-3, 4-5 and 6-7, of the inlet hole 9⁷, and of the holes 9¹-9², 9³-9⁴ and 9⁵-9⁶ brazed peripherally together which partly form the passages between the interspaces of the plates and the outlet from the plate-shaped heat exchanger.

Figure 2 shows a perspective view of a holding means 12 in accordance with the invention. The holding means 12 has the shape of a cut ring with an outwardly turning U-shaped cross-section from the central portion thereof and which is adapted for position about the hole edges. It is e.g. made from a U-shaped band steel or the like which is cut and shaped into a ring. The ring is made as precisely as possible relative to the holes and its ends 13 and 14 press against each other when the ring is positioned about the hole edges. Thereby, it is ensured that the ring is locked about the hole edges simultaneously with centering of the holes.

The heat exchanger plates and the holding means are preferably made of materials having the same capability of being brazed and approximately the same heat expansion coefficient to prevent that the ring is loosened during the brazing process. Most often, the parts are made of stainless steel to avoid corrosion of the plate-shaped heat exchanger.

For carrying out the process of the present invention, the holding means 12 is positioned about the edges of two oppositely arranged holes 8 or 9 in their respective heat exhange plate as shown in Figures 3 and 4. The holding means is locked by pressing its ends 13 and 14 against each other.

By means of its two sides the holding means is able to keep the heat exchange plates so tightly together that during the brazing process suitable capillary gaps (i.e. often less than 1/10 mm) are available for the brazing metal between the plates, respectively between plate and ring.

After or simultaneously with the positioning of the holding means, brazing metal may be put into the joints. However, it is preferable that the brazing metal is provided before the positioning of the holding means and, in particular, that the holding means are used for prepositioning of the brazing metal.

Hereafter, the plate-shaped heat exchanger thus assembled and provided with brazing metal is placed in a brazing oven wherein it is heated relatively slowly in order to avoid that the heat exchange plates buckle considerably relative to each other. In this connection, the holding means plays an important part since they prevent dissimilar heat expansion of the heat exchange plates to a high degree, the holding means locking and centering the plates relative to each other.

When the brazing metal melts, it does not only disperse in the available capillary gap between the plates, but also fills the gaps between the plates and the holding means. The holding means 12 thus forms an additional seal and enforcement along the edges of the holes 8 or 9. Simultaneously with performing said brazing, the heat exchanger plates may also be brazed at their outer edges to form the water and gas tight plate interspaces.

Plate-shaped heat exchangers assembled with said holding means have been brazed in an oven having a protective atmosphere and with the possibility of controlling the speed of heating so as to cause no deformation of the plates. However, there is no hindrance to use the procees as well in vacuum, in ovens with flux, as in salt baths if only a uniform and stable heating of the stack of plates to the brazing temperature is ensured.

## Claims

1. A process for coparallel joining, by brazing, at least two metal plates (1-7...), each having at least one through-going hole (8,9) for preparing a plate-shaped heat exchanger, the metal plates (1-7...) being arranged in coparallel relationship with their holes (8,9) positioned opposite each other, CHARACTERIZED in that the metal plates (1-7...) are kept in the coparallel relationship by means of a cut ring (12) having a cross-section which in the direction from its central portion has the shape of an outwardly turning U, and that the cut ring (12) is positioned about the hole edges by pressing its ends (13,14) against each other and keeps the metal plates (1-7...) so tightly together that during the brazing process suitable capillary gaps are available for the brazing metal between the plates (1-7...), respectively between the plates (1-7...) and the ring (12).

2. The process of claim 1, CHARACTERIZED in that brazing metal is pre-positioned in the cut ring (12).

3. The process of claims 1-2, CHARACTERIZED in that the cut ring (12) consists of brazable metal.

4. The process of claim 3, CHARACTERIZED in that the cut ring (12) possesses the same capability of being brazed as the metal sheets (1-7...).

5. The process of claims 1-4, CHARACTERIZED in that the metal plates (1-7...) are brazed in an oven having a protective atmosphere and with the possibility of controlling the speed of heating.

## Patentansprüche

1. Verfahren zum koparallelen Verbinden, durch Hartlöten, wenigstens zweier Metallplatten (1 - 7 ...), von denen jede wenigstens ein durchgehendes Loch (8, 9) hat, zum Herstellen eines plattenförmigen Wärmetauschers, wobei die Metallplatten in koparalleler Beziehung angeordnet sind, mit ihren Löchern (8, 9) einander gegenüberliegend positioniert, dadurch gekennzeichnet, daß die Metallplatten (1 - 7 ...) in der koparallelen Beziehung mittels eines Trennringes (12) gehalten sind, der einen Querschnitt hat, welcher in der Richtung von seinem Mittelbereich aus die Form eines nach außen gedrehten U hat, und daß der Trennring (12) um die Lochkanten durch Pressen seiner Enden (13, 14) gegeneinander gehalten wird und die Metallplatten (1 - 7 ...) so dicht zusammenhält, daß während des Hartlötprozesses geeignete Kapillarspalte für das Hartlotmetall zwischen den Platten (1 - 7 ...) beziehungsweise zwischen den Platten (1 - 7 ...) und dem Ring (12) verfügbar sind.

2. Verfahren nach Anspruch 1, dadurch gekennzeichnet, daß das Hartlotmetall in dem Trennring (12) vorpositioniert ist.

3. Verfahren nach Anspruch 1 - 2, dadurch gekennzeichnet, daß der Trennring (12) aus hartlötbarem Metall besteht.

4. Verfahren nach Anspruch 3, dadurch gekennzeichnet, daß der Trennring (12) dasselbe Vermögen besitzt, hartgelötet zu werden, wie die Metallbleche (1 - 7 ...).

5. Verfahren nach Anspruch 1 - 4, dadurch gekennzeichnet, daß die Metallplatten (1 - 7 ...) in einem Ofen hartgelötet werden, welcher eine Schutzatmosphäre hat und mit der Möglichkeit des Überwachens der Heizgeschwindigkeit.

## Revendications

1. Procédé pour réunir par brasage, de manière qu'elles soient parallèles entre elles, au moins deux plaques métalliques (1-7...), dont chacune possède au moins un trou traversant (8,9) pour la réalisation d'un échangeur de chaleur du type à plaques, les plaques métalliques (1-7...) étant disposées parallèlement entre elles et leurs trous (8,9) étant situés réciproquement en vis-à-vis, caractérisé en ce que les plaques métalliques (1-7...) sont maintenues parallèles entre elles au moyen d'une bague sectionnée (12) possédant une section transversale qui, dans la direction partant de sa partie centrale, possède la forme d'un U tourné vers l'extérieur, et qu'on dispose la bague sectionnée (12) autour des bords du trou en repoussant ses extrémités (13,14) l'une contre l'autre et en maintenant les plaques métalliques (1-7...) appliquées l'une contre l'autre suffisamment étroitement pour que pendant le processus de brasage, des interstices capillaires appropriés soient disponibles pour le métal de brasage entre les plaques (1-7...), respectivement entre les plaques (1-7...) et la bague (12).

2. Procédé selon la revendication 1, caractérisé en ce qu'on place préalablement un métal de brasage dans la bague sectionnée (12).

3. Procédé selon les revendications 1-2, caractérisé en ce que la bague sectionnée (12) est réalisée en un matériau pouvant être brasé.

4. Procédé selon la revendication 3, caractérisé en ce que la bague sectionnée (12) possède la même aptitude au brasage que des feuilles métalliques (1-7...).

5. Procédé selon les revendications 1-4, caractérisé en ce qu'on brase les plaques métalliques (1-7...) dans un four contenant une atmosphère protectrice et moyennant la possibilité de commande de la vitesse de chauffage.
